# EUROPEAN PATENT APPLICATION

(11) **EP 1 167 793 A2**
(43) Date of publication of application: **02.01.2002**
(21) Application number: 01114564.6
(22) Date of filing: 18.06.2001
(51) Int. Cl.: F16C 33/80

(54) **A rolling contact bearing for an electric motor**

(30) Priority: 30.06.2000 IT TO000650
(71) Applicant: SKF INDUSTRIE S.P.A., 10121 Torino (IT)
(72) Inventor: Pairone, Gianfranco, 10146 Torino (IT); Velardo, Antonio, 03049 Sant'Elia fiume Rapido (FR) (IT)
(74) Representative: Lotti, Giorgio

(57) **Abstract**

Rolling contact bearing (1) for an electric motor presenting an inner race (2) which revolves around a rotation axis (A) and which is suitable for being mounted on a drive shaft of the motor itself, an outer race (3) which is fixed coaxial to the inner race (2), a number of revolving elements (4) which are interposed between the two races (2, 3) and at least one sealing element (8), which is mounted onto one side of the rolling contact bearing (1), and which is integral to the fixed race (3) so that it at least partially closes a gap between the two races (2, 3); a protective shield (10) which is mounted on the same side as the sealing element (8) and which is integral to the revolving race (2), and which presents a first annular section (10) which projects towards the inside of the gap(L) and which radially overlaps the sealing element (8) in order to partially shield the sealing element (8) itself.

## Description

The present invention refers to a rolling contact bearing for an electric motor.

In particular, the present invention refers to a rolling contact bearing for a rotor motor for small domestic appliances, to which the following description will make specific reference without, however, losing any of its generality.

Rolling contact bearings which are currently used for electric rotor motors with regard to small domestic appliances must be as cost-effective as possible and they usually comprise an inner revolving race which is suitable for being mounted onto a drive shaft of the motor itself, an outer race which is coaxial to the inner race, a number of revolving elements which are interposed between the two races and, for each side of the rolling contact bearing, a sealing element, which is mounted integral to the fixed race in order to close the gap between the two races, and which is suitable for preventing any solid impurities or any dampness from penetrating inside the interior of the rolling contact bearing itself.

Bearing in mind the demands imposed by the above description, the technical features of the sealing element are not equal to the technical features of the most expensive elements, and also bearing in mind the presence of the rotor motor, the technical features are not such as to guarantee a valid separation of the interior of the rolling contact bearing from the external environment.

Some constructive solutions, with the aim of reducing the flow of impurities into the rolling contact bearing, and bearing in mind the necessity of keeping the costs of producing the rolling contact bearing as low as possible, have been adopted some protective shields, which are mounted on the side of the rolling contact bearing which faces the electric motor which are fixed to a support frame for the rolling contact bearing, or which are obtained from spacers or threaded locking fixing rings.

Although such constructive solutions have proven to be efficient from the point of view of combating impurities, they have also proven to be uneconomical due to the number of elements involved and the time necessary for assembly.

The aim of the present invention is to produce a rolling contact bearing for electric motors which will be quick and easy to assemble and which will take into account the necessity for economy and which, at the same time, will guarantee an excellent sealing capacity against solid impurities and dampness.

According tot he present invention, a rolling contact bearing for an electric motor will be produced, which comprises an inner race which revolves around a rotation axis and which is suitable for being mounted onto a drive shaft of the motor itself, an outer race which is fixed coaxial to the inner race and a number of revolving elements which are interposed between the two races and at least one sealing element, which is mounted on one side of the rolling contact bearing integral to the fixed race in order to close at least partially a gap between the two races; the rolling contact bearing being characterised by the fact of comprising a protective shield which is mounted on the same side as the sealing element and which is integral to the revolving inner race, and which presents a first annular section which projects radially towards the inside of the said gap and which radially overlaps the sealing element in order to partially shield the sealing element itself.

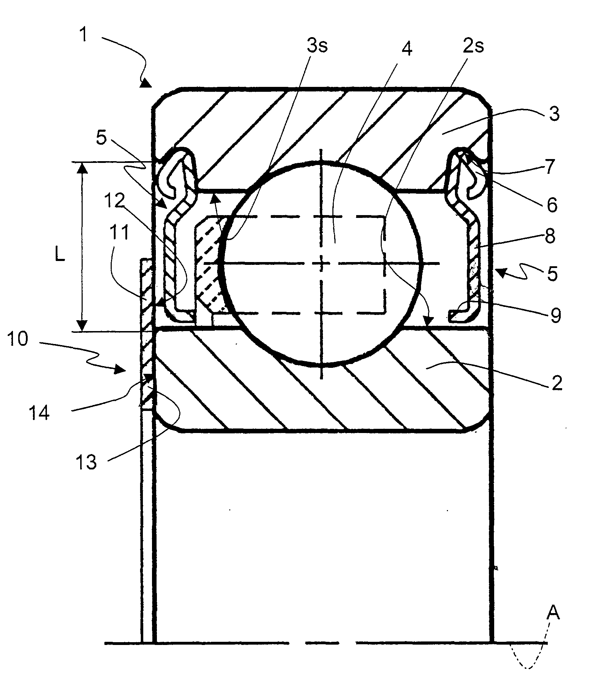

The present invention will now be described with reference to the attached drawing, which illustrates an axial section view of a preferred embodiment of the present invention, and which is provided as an example of a non-limiting form of embodiment.

With reference to the annexed figure, the number 1 refers to a rolling contact bearing for an electric motor in its entirety.

The rolling contact bearing 1 comprises an inner race 2 which revolves around a rotation axis A and which is suitable for being assembled on a drive shaft (which is not illustrated) of the electric motor itself, an outer race 3 which is fixed coaxial to the inner race 2, and a number of balls 4 which are interposed between the two races 2 and 3.

The rolling contact bearing 1 also comprises two sealing elements 5 which are assembled on the two sides of the rolling contact bearing 1 itself and which are integral to the race 3 in order to at least partially close a gap L between the two races 2 and 3 in such a way as to prevent solid impurities from penetrating inside the rolling contact bearing 1. Each of the elements 5 comprises a flexible annular section 6 which is bent into a U shape and which is inserted inside a respective housing 7 which is obtained along a cylindrical surface 3s inside the race 3, and a metallic section 8 which projects towards a cylindrical surface 2s inside the race 2, and presenting an end 9 which is bent into an L shape and which faces the surface 2s itself and is inclined towards the revolving balls 4.

Finally, the rolling contact bearing 1 comprises a protective shield 10, which is assembled lateral to the rolling contact bearing 1, and which is integrally connected to the race 2, and which presents an annular section 11 which projects from the race 2 into the gap L. The section 11 radially overlaps the end 9 of the element 5 on the same side as the rolling contact bearing 1 in such a way as to partially shield the element 5 itself, and is axially staggered in relation to the metallic section 8 in such a way as to form, with the element 5, a coiled centrifugal duct 12 for the expulsion of impurities.

Finally, the shield 10 comprises a further annular section 13, which is both coplanar to and integral with the section 10, and which is welded onto a lateral surface 14 of the revolving race 2.

When in use, the rolling contact bearing 1 is installed onto the above-mentioned drive shaft with the shield 10 facing towards the motor itself, or, more generally, in the direction from which any contamination originates, the rotation of the race 2 also determines the rotation of the shield 10 causing a centrifugal effect which results in the expulsion of any impurities from inside the duct 11.

It is intended that the present invention should not be limited to the form of embodiment herein described and illustrated, which is to be considered as a form of embodiment of the rolling contact bearing and which may be subject to further modifications in terms of the shape and arrangement of the parts, constructive details and assembly.

## Claims

1. Rolling contact bearing (1) for an electric motor which comprises an inner race (2) which revolves around a rotation axis (A) and which is suitable for being mounted onto a drive shaft of the motor itself, an outer race (3) which is fixed coaxial to the inner race (2) and a number of revolving elements (4) which are interposed between the two races (2, 3) and at least one sealing element (5), which is mounted on one side of the rolling contact bearing (1) integral to the fixed race (3) in order to close at least partially a gap between the two races (2. 3); the rolling contact bearing (1) being **characterised by** the fact of comprising a protective shield (10) which is mounted on the same side as the sealing element (5) and which is integral to the revolving inner race (2), and which presents a first annular section (11) which projects radially towards the inside of the said gap and which radially overlaps the sealing element (5) in order to partially shield the sealing element (5) itself.

2. Rolling contact bearing according to Claim 1, **characterised by** the fact that the said sealing element (5) comprises a flexible annular section (6) which is bent into a U-shape and which is inserted inside a respective housing (7) which is obtained inside the outer race (3), and a metallic section (8) which extends radially towards the inner race (2), and which presents a free end (9) which is bent into an L shape and which faces the inner race (2) itself and which is distanced from the inner race (2) itself; the said first annular section (11) being radially overlapping at least the free end (9), and being axially staggered in regard to the metallic section (8).

3. Rolling contact bearing according to Claim 2, **characterised by** the fact that the said first annular section (10) and the said metallic section (8) define a centrifugal duct between them. (12).

4. Rolling contact bearing according to Claim 1, **characterised by** the fact that the said protective shield comprises a second annular section (13) which is coplanar to and integral with the first annular section (10), and which is welded to the revolving race (2)
